# FASCICULE DE BREVET EUROPEEN

(11) **EP 1 713 017 B1**
(45) Date de publication et mention de la délivrance du brevet: **15.05.2013**
(21) Numéro de dépôt: 06290482.6
(22) Date de dépôt: 24.03.2006
(51) Int. Cl.: B60R 1/00, G06K 9/20, G06T 7/00, G08G 1/16, H04N 5/225

(54) **Procédé, dispositif et caméra pour la détection d'objets à partir d'images numériques**
Verfahren, Anordnung und Kamera zur Detektion von Gegenstände durch Verwendung von digitalen Bilder
Procedure, device and camera for detection of objects using digital images

(30) Priorité: 11.04.2005 FR 0503581
(43) Date de publication de la demande: 18.10.2006
(73) Titulaire: VALEO VISION, 93012 Bobigny Cedex (FR)
(72) Inventeur: Fleury, Benoist, 94300 Vincennes (FR); Leleve, Joel, 93800 Epinay Sur Seine (FR); Robert, Caroline, 75011 Paris (FR)

(56) Documents cités:
- WO-A-00/64146
- WO-A-2004/029659
- SHIMIZU S ET AL: "A wide angle vision sensor with high distortion lens-detection of camera location and gaze direction based on two-parallel-line algorithm" INDUSTRIAL ELECTRONICS, CONTROL, AND INSTRUMENTATION, 1996., PROCEEDINGS OF THE 1996 IEEE IECON 22ND INTERNATIONAL CONFERENCE ON TAIPEI, TAIWAN 5-10 AUG. 1996, NEW YORK, NY, USA,IEEE, US, vol. 3, 5 août 1996 (1996-08-05), pages 1600-1605, XP010203222 ISBN: 0-7803-2775-6

## Description

L'invention concerne de manière générale le domaine de l'aide à la conduite d'un véhicule automobile. Plus particulièrement, l'invention concerne un procédé et un dispositif de détection d'objets dans une image numérique d'une scène de route, tels que par exemple des piétons ou des panneaux de signalisation routière. L'invention concerne également un appareil numérique de prise d'images, tel que caméra, adapté à une mise en oeuvre du procédé de détection d'objets ci-dessus.

Il est connu dans l'état de la technique différents systèmes d'aide à la conduite d'un véhicule automobile faisant appel à une ou plusieurs caméras ou capteurs d'image.

Dans ces systèmes connus, les caméras sont généralement dédiées à des applications spécifiques. En d'autres termes, une caméra est nécessaire pour chaque type d'application, par exemple, une première caméra pour une prise d'images dans le domaine visible et une seconde caméra pour une prise d'images dans le domaine du proche infrarouge.

Par ailleurs, la détection d'un objet au loin, au centre de l'image, et d'un objet proche en bord de champ est rarement compatible avec l'utilisation d'une seule caméra.

En effet, un objet au loin et au centre de l'image ne représente que peu de pixels par rapport à un objet au bord de l'image et proche de l'objectif de la caméra.

Un faible champ d'ouverture permet la détection d'un objet présent au loin et au centre de l'image, mais ne permet pas de détecter un objet proche du véhicule et légèrement sur le côté. A l'inverse, un angle d'ouverture plus grand permet la détection d'un objet sur les bords, mais ne permet pas la détection d'un objet au loin, car l'objet est alors représenté par un faible nombre de pixels.

Les solutions disponibles préconisent, dans les cas ci-dessus, l'utilisation d'un capteur d'image coûteux ayant un nombre important de pixels, ou bien, d'un zoom, au détriment de la simultanéité de mise à disposition des images pour différents champs d'ouverture.

Les techniques actuelles ne facilitent pas la conception de dispositifs compacts et économiques qui soient bien adaptés aux contraintes importantes de robustesse et de coûts, généralement imposées dans le domaine automobile, et capables de fournir aux systèmes d'aide à la conduite les informations de différents types demandées par les applications implantées dans ces systèmes.

Il est également connu de la publication « A wide angle vision sensor with high distorsion lens - détection of camera location and gaze distorsion lens based on two parallel line algorithm » de Shimizu and al. (Industrial Electronics, control and instrumentation 1996, proceedings of the 1996 IEEE IECON 22nd International Conférence on Taipai, Taiwan 5-10 August 1996, New York NY USA, IEEE, US, vol.3, 5 aout 1996, pages 1600-1605) une étude d'une nouvelle méthode pour détecter la position d'une camera selon deux lignes limites paralléles d'une route projetée dans la zone périphérique, à l'aide d'une nouvelle lentille anamorphique permettant un champ de vision de 120°.

Il est connu de WO 00/64146 (Infineon Technologies AG) de réaliser un capteur d'images avec un réseau de microlentilles Ce document enseigne qu'on peut utiliser des lentilles avec des distances focales différentes. Il est aussi proposé de réaliser un capteur avec résolution variable, avec évaluation d'un nombre de détecteurs par unité de surface réduit dans les régions correspondant aux marges de l'image.

La présente invention vise à remédier aux inconvénients de la technique antérieure exposés ci-dessus, en fournissant des procédé et dispositif du type susmentionné qui autorisent une détection à la fois lointaine et large des objets et cela avec un seul capteur d'image qui peut être réalisé avec un coût modéré.

Selon un premier aspect, la présente invention fournit un procédé de détection d'objets dans une image numérique selon l'objet de la revendication 1.

Selon une caractéristique particulière du procédé de l'invention, la première zone d'image est une zone centrale de l'image numérique et la seconde zone d'image est une zone de bord de l'image numérique, et la première résolution est choisie supérieure à la seconde résolution.

Selon un mode de réalisation particulier, l'étape d'acquisition d'image est réalisée au moyen d'un appareil numérique de prise d'images équipé d'un objectif anamorphique, et l'aberration introduite dans l'image est prédéterminée de telle manière à obtenir une première résolution angulaire sensiblement constante pour un premier secteur du champ d'ouverture optique de l'objectif anamorphique correspondant à la première zone d'image et une seconde résolution angulaire variable pour un second secteur du champ d'ouverture optique de l'objectif anamorphique correspondant à la seconde zone d'image, la première résolution angulaire étant supérieure à la seconde résolution angulaire.

Selon encore une autre caractéristique particulière, l'appareil numérique de prise d'images selon l'invention comprend également un filtre infrarouge disposé au niveau d'un plan image ou d'un plan image intermédiaire de l'appareil.

De préférence, le filtre infrarouge comprend au moins deux zones dans lesquelles sont assurées des filtrages distincts, une première zone correspondant à la partie haute de l'image et dans laquelle les rayons infrarouges ne subissent sensiblement aucun filtrage et une seconde zone correspondant à la partie basse de l'image et dans laquelle les rayons infrarouges sont filtrés sensiblement en totalité.

De plus, le filtre infrarouge peut être prévu de manière à assurer un filtrage des rayons infrarouges qui augmente progressivement du haut vers le bas de l'image numérique.

Selon les applications de l'invention, le capteur d'image peut être de type CCD ou CMOS.

Corrélativement, l'invention concerne également un dispositif de détection d'objets dans une image numérique comme défini dans la revendication 3.

Selon une autre caractéristique particulière, le dispositif selon l'invention comprend également un écran d'affichage et l'unité de traitement comprend des moyens aptes à corriger l'image numérique pour produire une image numérique corrigée restituant la scène vue par l'appareil numérique de prise d'images, l'image numérique corrigée étant destinée à un affichage sur l'écran.

De préférence, le dispositif comporte également des moyens pour fournir des informations sur chaque objet détecté.

L'invention concerne également un moyen de stockage d'information, et un programme d'ordinateur dont l'exécution autorise une mise en oeuvre du procédé selon l'invention.

D'autres aspects et avantages de la présente l'invention apparaîtront plus clairement à la lecture de la description de modes et formes de réalisation particuliers qui va suivre, cette description étant donnée à titre d'exemple non limitatif et faite en référence aux dessins annexés, dans lesquels :
la Fig.1 montre la structure générale d'une forme de réalisation préférée du dispositif de détection d'objets selon l'invention;
la Fig.2 est un diagramme théorique montrant un exemple de distribution de résolutions angulaires dans un appareil numérique de prise d'images ;
les Figs.3A et 3B montrent respectivement un exemple de scène et une image avec aberration correspondante telle qu'obtenue conformément à l'invention ;
la Fig.4 est un algorithme montrant différentes étapes du procédé de détection d'objets selon l'invention ;
la Fig.5 montre une configuration matérielle d'une unité de traitement comprise dans un dispositif de détection d'objets selon l'invention;
les Figs.6A et 6B montrent des première et seconde formes de réalisation particulières d'un appareil numérique de prise d'images, la Fig. 6B montre une réalisation selon l'invention ;
la Fig.6C montre un cas de limitation angulaire à interdire dans un appareil numérique de prise d'images selon l'invention ; et
la Fig.7 montre, sous une forme simplifiée, un exemple de filtrage infrarouge introduit dans une forme de réalisation particulière de l'appareil numérique de prise d'images selon l'invention.

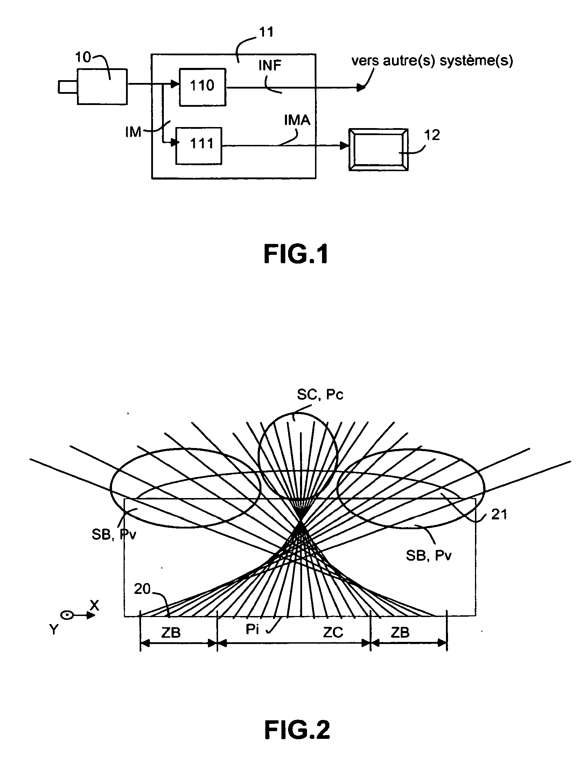

En référence à la Fig.1, une forme de réalisation particulière du dispositif de détection d'objets selon l'invention comprend essentiellement une caméra 10, une unité de traitement 11 dans laquelle sont laquelle sont implantés des modules logiciels de traitement d'image 110 et 111, et un écran d'affichage 12.

Conformément à l'invention, la caméra 10 est apte à fournir des images IM comportant une aberration déterminée. A cette fin, la caméra 10 peut être munie d'un objectif anamorphique.

L'aberration introduite dans les images lM par la caméra 10 est destinée à permettre une détection d'objets proches et lointains présents dans la scène vue par la caméra 10, et cela à partir des images lM fournies par la caméra 10.

Typiquement, l'aberration introduite est calculée par l'homme du métier lors de la conception de l'objectif optique de la caméra 10, en fonction notamment de l'application envisagée de l'invention.

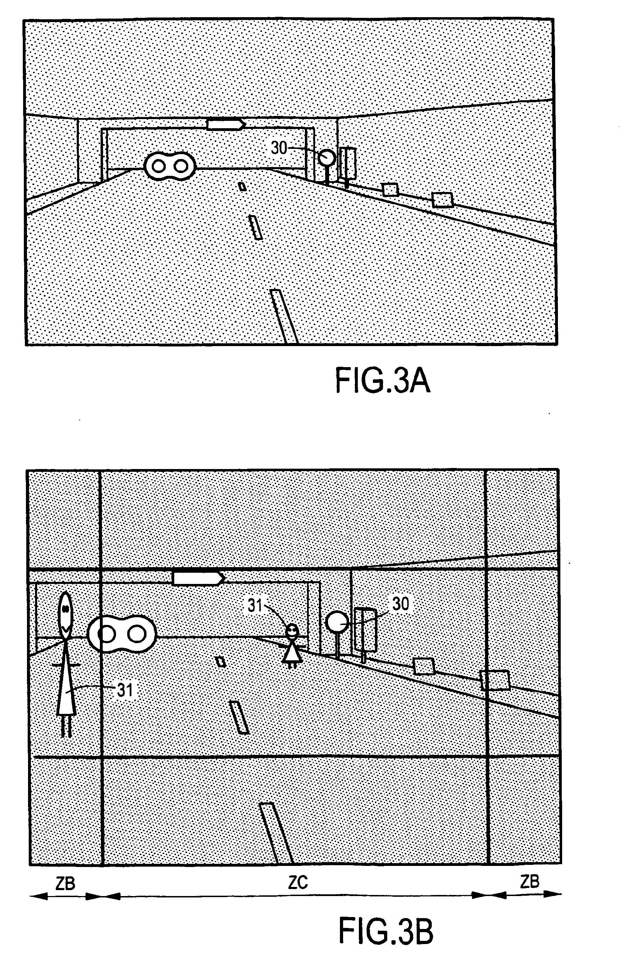

Un exemple de l'effet d'un objectif optique déterminé pour introduire une aberration telle que requise par l'invention est maintenant décrit en référence à la Fig.2 et aux Figs.3A et 3B.

Afin de simplifier la description de l'invention, l'aberration est ici considérée dans une seule dimension, à savoir, selon l'axe X à la Fig.2 et selon l'axe horizontal à la Fig.3B.

En référence à la Fig.2, le repère 20 correspond au capteur d'image par exemple de type CCD ou CMOS, et le repère 21 à un objectif anamorphique.

Le capteur d'image 20 comporte de manière classique une matrice composée de pixels Pi dont le pas est représenté à la Fig.2 comme ayant une valeur constante déterminée.

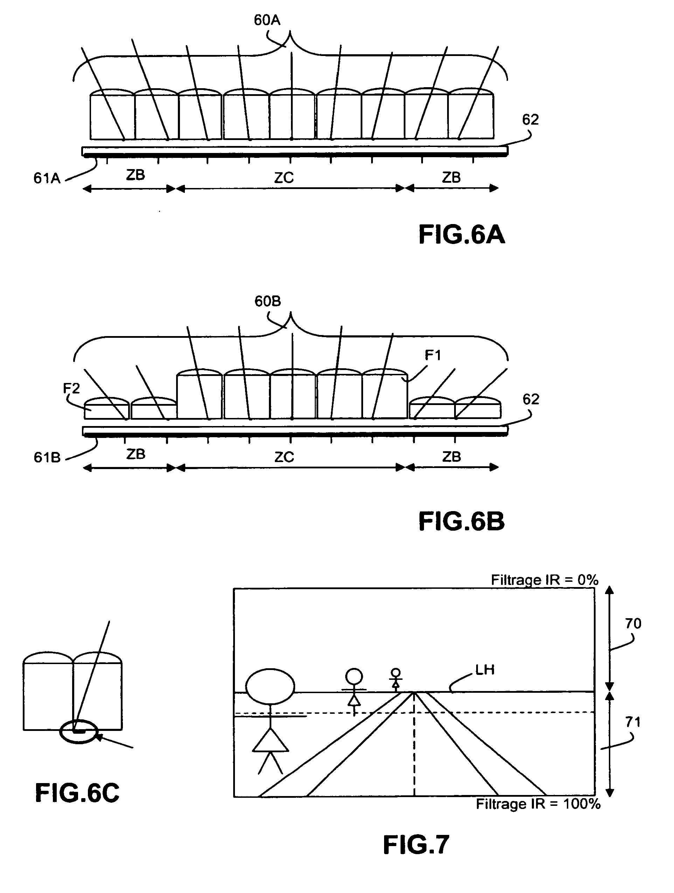

L'objectif anamorphique 21 est représenté ici sous la forme d'une seule lentille. On notera cependant que l'objectif anamorphique 21 peut également, conformément à l'invention, être réalisé sous la forme d'une pluralité de microlentilles obtenues par l'utilisation de techniques micro-optiques, comme cela est décrit par la suite en référence aux Figs.6A, 6B et 6C.

Dans le forme de réalisation de la Fig.2, qui n'est pas couvert par l'invention, l'objectif anamorphique 21 comporte une lentille de type torique. Bien entendu, l'objectif 21 peut comporter plusieurs lentilles toriques.

Comme cela apparaît à la Fig.2, le champ d'ouverture de la caméra 10 est divisé en des secteurs angulaires SC et SB.

Le secteur angulaire SC au centre du champ présente un pas angulaire Pc pour une zone de pixels ZC. Le pas Pc est ici approximé comme étant sensiblement constant.

Les secteurs angulaires SB sur les bords du champ présentent un pas angulaire Pv pour des zones de pixels ZB qui croît à partir de la zone centrale du champ vers les bords de celui-ci.

Bien entendu, avec ce type d'objectif 21 à lentille torique, il n'y a pas à proprement parlé de discontinuité ou palier dans la variation du pas angulaire, mais une transition continue du pas angulaire Pc vers le pas angulaire Pv et inversement.

L'aberration introduite par l'objectif anamorphique 21 a pour effet de privilégier en nombre de pixels le secteur angulaire central SC par rapport aux secteurs angulaires de bord ZB. En d'autres termes, pour le secteur angulaire central SC, le rapport de l'ouverture angulaire du secteur sur le nombre de pixels de la zone de pixels correspondante est supérieur à celui obtenu pour les secteurs angulaires SB.

Un exemple de l'effet introduit sur l'image IM par l'objectif anamorphique est montré à la Fig.3B, pour une scène vue par la caméra 10 qui est celle montrée à la Fig.3A.

L'image de la Fig.3A est celle qui serait normalement restituée par la caméra 10 si celle-ci était équipée d'une lentille sphérique.

Comme montré à la Fig.3B, la zone centrale ZC de l'image IM ne comporte pas d'aberration et conserve des proportions correctes pour les objets présents dans la zone. De plus, le nombre élevé de pixels dans la zone ZC autorise une résolution suffisante pour la détection des objets distants. On remarquera notamment la bonne lisibilité du panneau de signalisation 30 dans l'image IM de la Fig.3B, comparativement à l'image de la Fig.3A.

La nature de l'aberration introduite dans les zones de bord ZB est représentée de manière simplifiée à la Fig.3B par la déformation du personnage 31. Dans cet exemple, le personnage 31 subit une déformation en compression selon l'axe horizontal. Notons ici que l'aberration introduite dans les zones de bords ZB par l'objectif anamorphique doit être déterminée lors du calcul de l'objectif de telle manière à ce qu'elle n'interdise pas une détection correcte des objets dans les zones ZB.

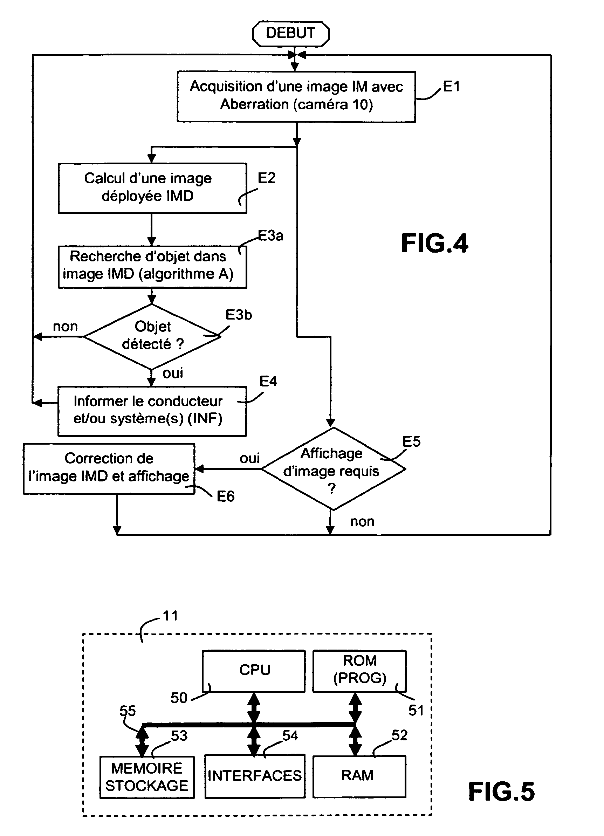

En référence maintenant plus particulièrement aux Figs.1 et 4, la caméra 10 délivre les images IM à des modules logiciels 110 et 111 de l'unité de traitement 11.

Le module logiciel 110 assure la fonction de détection d'objets dans l'image IM.

Le module logiciel 111 assure une fonction de correction d'image qui est nécessaire notamment lorsqu'un affichage sur l'écran 12 de la scène vue par la caméra 10 est souhaité.

La Fig.4 montre des étapes de traitement E1 à E6 effectuées par l'unité de traitement 11.

A l'étape E1, la caméra 10 produit une image IM qui correspond à une scène vue par celle-ci. L'image IM, qui comporte une aberration par compression introduite par l'objectif anamorphique de la caméra 10, est fournie aux modules logiciels 110 et 111.

A l'étape E2, il est calculé une image déployée IMD à partir de l'image avec aberration IM. L'opération effectuée à l'étape E2 permet d'obtenir une image IMD dans laquelle les objets présents ont des proportions normales, c'est-à-dire, celles qu'ils ont dans la réalité. Le déploiement des zones d'image compressées effectué à l'étape E2 sur l'image IM permet d'obtenir une image IMD dans laquelle l'aberration apparaît comme étant éliminée en grande partie.

Cette étape de calcul E2 présente l'intérêt, par la fourniture de l'image IMD, de n'appliquer ensuite qu'un seul algorithme A de recherche d'objets pour détecter des objets déterminés dans cette image IMD, tels que des panneaux de signalisation routière ou des obstacles.

Pendant l'étape E3a, il est exécuté l'algorithme A qui recherche des objets déterminés dans l'ensemble de l'image IMD.

A l'étape conditionnelle E3b, lorsqu'un objet recherché est détecté dans l'image IMD par l'algorithme A, des informations de détection INF sur les objets détectés sont fournies en sortie par le module logiciel 110.

On notera que dans cette forme de réalisation particulière, les étapes E2, E3a, E3b et E4 sont implémentées dans le module 110.

A l'étape E4, les informations INF sont, par exemple, converties en des informations sonores et/ou visuelles destinées au conducteur d'un véhicule automobile dans lequel est embarqué le dispositif de l'invention. Dans d'autres applications de l'invention, les informations INF sont transmises à un ou plusieurs autres systèmes équipant le véhicule, tels par exemple qu'un système d'aide à la conduite ou des systèmes de commande de fonctions du véhicule.

A l'étape E5, lorsqu'un affichage de la scène est requis, il est exécuté l'étape E6 qui correspond au traitement de correction d'image pour affichage effectué par le module logiciel 111. Le module 111 fournit des images corrigées IMA dans lesquelles est éliminée l'aberration présente dans les images IM. Les images IMA sont affichées sur l'écran 12. En variante, ce sont les images IMD calculées par le module 110, et non les images IM, comme montré à la Fig.1, qui sont fournies au module 111 pour produire les images IMA.

Comme montré à la Fig.5, l'unité de traitement 11 est d'une architecture classique et comprend une unité centrale de traitement CPU 50 telle qu'un microprocesseur, une mémoire morte ROM ou EEPROM 51, une mémoire vive RAM 52, une mémoire de stockage 53 par exemple de type FLASH, des interfaces 54 et un bus de communication interne 55. Dans un autre mode de réalisation de l'invention, l'unité de traitement 11 est également équipée d'un moyen de communication homme-machine, tel qu'un clavier, à travers lequel le conducteur peut sélectionner différents modes de fonctionnement.

L'unité de traitement 11 exécute un ou plusieurs programmes PROG qui autorisent la mise en oeuvre du procédé selon l'invention.

Dans la configuration de la Fig.5, le code exécutable des programmes PROG est logé en partie ou en totalité dans la mémoire ROM 51.

Le code exécutable des programmes PROG peut aussi être chargé en partie dans la mémoire de stockage 53, via les interfaces 54, à partir par exemple d'une disquette introduite dans un lecteur de disquette ou à travers une liaison de communication reliée par exemple à un micro-ordinateur utilisé pour la configuration de l'unité de traitement 11.

Bien entendu, la disquette à partir de laquelle sont chargés les programmes PROG peut être remplacée par un disque compact CD-ROM ou une carte mémoire. De manière plus générale, tout moyen de stockage d'information lisible par un ordinateur ou un microprocesseur, intégré ou non dans l'unité de traitement 11, éventuellement amovible, est adapté à mémoriser, en partie ou en totalité, les programmes PROG.

L'unité centrale 50 commande l'exécution des instructions ou portions de code des programmes PROG, les instructions étant stockées dans la mémoire ROM 51 et/ou la mémoire de stockage 53 et/ou les autres moyens de stockage d'information indiqués ci-dessus.

Lors de la mise sous tension de l'unité de traitement 11, les programmes PROG stockés dans une mémoire non volatile, telle que la mémoire ROM 51 ou la mémoire de stockage 53, sont transférés en partie ou en totalité dans la mémoire volatile RAM 52 qui contiendra alors le code exécutable transféré des programmes PROG ainsi que différents registres pour mémoriser des variables et paramètres nécessaires à la mise en oeuvre du procédé selon l'invention.

On notera également que l'unité de traitement 11 peut prendre la forme d'un appareil programmé, Cet appareil programmé contient alors le code exécutable des programmes PROG sous une forme figé dans un circuit intégré à application spécifique (ASIC).

En référence essentiellement aux Figs.6A et 6B, il est maintenant décrit des première et seconde formes de réalisation particulières de la caméra 10. Ces formes de réalisation particulières de la caméra 10 sont obtenues par l'utilisation de techniques micro-optiques.

Conformément à ces formes de réalisation particulières, la caméra 10 comporte notamment un objectif optique formé d'une pluralité de microlentilles et un capteur d'image de type CCD ou CMOS.

Comme montré à la Fig.6A, la première forme de réalisation de la caméra 10 comprend un objectif optique 60A formé d'une pluralité de microlentilles sensiblement identiques et ayant une même distance focale.

Un objectif de ce type est décrit dans l'article « Artificial apposition compound eye fabricated by micro-optics technology » de Jacques Duparré, Peter Dannberg, Peter Schreiber, Andreas Bräuer et Andreas Tünnermann, publié dans APPLIED OPTICS, Vol.43, No.22, 1 August 2004.

Dans l'article ci-dessus de J. Duparré et al., les microlentilles de l'objectif sont agencées selon un pas constant et sont associées à des pixels d'un capteur d'image qui sont agencés aussi selon un pas constant. Le pas des pixels est inférieur au pas des microlentilles de telle manière qu'un pixel considéré voit un angle de champ de plus en plus grand à mesure que le pixel considéré s'écarte de l'axe de l'objectif. Cependant, une limitation angulaire en ouverture est imposée par l'introduction de parois opaques entre les microlentilles. Ces parois opaques sont destinées à empêcher l'apparition d'images fantômes. La résolution angulaire obtenue dans la réalisation décrite dans cet article est constante.

Dans la forme de réalisation de la Fig.6A, qui n'est pas couverte par l'invention, la caméra 10 se différencie de la réalisation de l'article de J. Duparré et al. notamment par le fait qu'il est introduit une rupture dans le pas des pixels du capteur d'image 61 A.

Ainsi, dans la région centrale ZC, le pas des pixels a une première valeur. Dans les régions de bord ZB, le pas des pixels a une seconde valeur supérieure à la première valeur. Conformément à l'invention, il est donc prévu des résolutions angulaires différentes pour la zone centrale ZC et les zones de bord ZB.

Comme montré à la Fig.6B, la seconde forme de réalisation de la caméra 10 selon l'invention comprend un objectif optique 60B formé d'une pluralité de microlentilles réparties en deux types différents et un capteur d'image 61 B.

Les microlentilles de l'objectif optique 60B et les pixels du capteur d'image 61 B ont des pas constants différents. Le pas constant des pixels est inférieur au pas constant des microlentilles.

Un premier type des microlentilles regroupe les lentilles de la zone centrale ZC qui ont toutes une même distance focale F1. Un second type des microlentilles regroupe les lentilles des zones de bord ZB qui ont toutes une même distance focale F2 inférieure à F1. Cette rupture dans la distance focale des microlentilles autorise l'introduction, conformément à l'invention, de résolutions angulaires différentes pour la zone centrale ZC et les zones de bord ZB.

Compte tenu du pas constant des pixels du capteur d'image 61 B, il est possible, dans cette seconde forme de réalisation, d'utiliser un capteur d'image standard, ce qui présente un avantage au niveau du coût.

On notera ici que l'objectif optique 60B et le capteur d'image 61 B doivent être conçus, c'est-à-dire que les pas constants des microlentilles et des pixels doivent être choisis, de telle manière à éviter d'atteindre une limitation angulaire pour les pixels dans la zone centrale de l'image.

Comme montré à titre illustratif à la Fig.6C. Cette limitation angulaire intervient pour un pixel Pi lorsque celui-ci est situé dans une zone de transition entre deux microlentilles adjacentes.

Dans les formes de réalisation de la caméra 10 qui ont été décrites ci-dessus en référence aux Figs.6A et 6B, la variation de la résolution dans l'image a essentiellement été décrite comme comportant des paliers ou niveaux correspondant aux zones d'images ZC et ZB, consécutivement à une variation de même type du pas des pixels ou des microlentilles. On notera ici que l'invention ne se limite cependant en aucun cas à ce type de variation. En effet, dans certaines applications, l'objectif et/ou le capteur d'image de la caméra peuvent être conçus de telle manière à introduire dans l'image une variation continue de la résolution, par exemple par une variation correspondante du pas des pixels ou des microlentilles. Un grand nombre de valeurs de résolution différentes peuvent alors être présentes dans l'image.

Comme montré également aux Figs.6A et 6B, la caméra 10 selon l'invention peut être équipé d'un filtre infrarouge (IR) 62.

Comme montré à la Fig.7, le filtre IR 62 est prévu de manière à procurer un filtrage IR différent selon la zone de l'image. Cette caractéristique de filtrage IR distinct selon la zone de l'image permet l'utilisation de la caméra 10 à la fois pour des applications fonctionnant avec des longueurs d'onde dans le domaine visible et pour des applications fonctionnant avec des longueurs d'onde dans le domaine du proche infrarouge.

De préférence, le filtre IR 62 est placé sur le plan image ou sur un plan image intermédiaire de manière à ne pas brouiller l'image produite par la caméra 10.

La Fig.7 montre à titre d'exemple un filtre IR 62 divisé en deux zones distincte 70 et 71.

La zone 70 est située dans la moitié haute de l'image et ne comporte pas de filtrage IR. En effet, dans cette zone 70, l'information IR présente n'est pas éblouissante de jour pour la caméra 10 et ne demande pas à être filtrée. L'information IR reste donc présente dans cette zone 70 et peut être utilisée la nuit par exemple pour une application de vision nocturne.

La zone 71 est située dans la moitié basse de l'image et comporte un filtrage IR. Dans cette zone 71, il existe un risque d'éblouissement de la caméra 10 par l'information IR présente. Ce risque est éliminé par le filtrage IR assuré dans cette zone 71. La suppression de l'information IR dans la zone 71 n'est pas pénalisante de nuit compte tenu que la zone 71 est éclairée par les projecteurs du véhicule et ne demande pas à être couverte par une image IR.

Bien évidement, d'autres formes de réalisation sont possibles pour le filtre IR 62, celles-ci dépendant essentiellement des applications de l'invention. Ainsi, le filtre IR 62 peut prendre la forme d'un filtre variant progressivement d'une zone opaque aux rayons IR vers une zone transparente aux rayons IR, par exemple avec un filtrage de 100% en bas de l'image et un filtrage de 0% en haut de l'image. On notera que la variation du filtrage lR n'est pas nécessairement linéaire.

## Revendications

1. Procédé d'aide à la conduite d'un véhicule automobile par détection d'objets dans une image numérique d'une scène de route, comprenant les étapes de :
- acquisition (E1) au moyen d'un appareil numérique de prise d'images d'une image numérique avec aberration (IM) d'une scène de route, ladite image numérique incorporant au moins une première (ZC) et une seconde (ZB), zone d'image lesdites première et seconde zones d'image (ZC, ZB) ayant respectivement au moins une première résolution et au moins une seconde résolution, lesdites première et secondes résolutions étant différentes;
- calcul (E2) d'une image numérique déployée (IMD), par déploiement d'au moins une zone (ZB) de ladite image numérique avec aberration (IM);
- application (E3a, E3b) d'un algorithme de détection d'objets (A) dans ladite image numérique déployée (IMD); et
- fourniture (E4) d'informations (INF) sur chaque objet détecté dans ladite image numérique déployée (IMD),
et en ce que ladite étape d'acquisition d'image (E1) est réalisée au moyen d'un appareil numérique de prise d'images (10) équipé d'un objectif anamorphique (21) comportant une pluralité de microlentilles (60B) réparties en des premier et second types auxquels correspondent respectivement des première (F1) et seconde (F2) distances focales, le premier type de microlentilles regroupant les lentilles de la première zone (ZC), dite centrale, de l'image, qui ont toutes la même première distance focale (F1), le second type de microlentilles regroupant les lentilles de la deuxième zone (ZB), dite de bord, de l'image qui ont toutes la même seconde distance focale (F2) inférieure à la première distance focale (F1), lesdites microlentilles (60B) étant associées respectivement à une pluralité de pixels dudit capteur d'image (61B), lesdites microlentilles (60B) et lesdits pixels (61A) étant disposés selon des pas constants différents, le pas des pixels étant inférieur au pas des microlentilles,
ladite aberration étant prédéterminée de telle manière à obtenir une première résolution angulaire sensiblement constante (Pc) pour un premier secteur (SC) du champ d'ouverture optique dudit objectif anamorphique (21) correspondant à ladite première zone d'image (ZC) et une seconde résolution angulaire variable (Pv) pour un second secteur (SB) du champ d'ouverture optique dudit objectif anamorphique (21) correspondant à ladite seconde zone d'image (ZB), ladite première résolution angulaire (Pc) étant supérieure à ladite seconde résolution angulaire (Pv).

2. Procédé selon la revendication 1, **caractérisé en ce que** ladite première zone d'image est une zone centrale (ZC) de ladite image numérique (IM, IMD) et ladite seconde zone d'image est une zone de bord (ZB) de ladite image numérique (IM, IMD).

3. Dispositif de détection d'objets dans une image numérique, adapté pour être embarqué dans un véhicule automobile, comprenant un appareil numérique de prise d'images (10) et une unité de traitement (11), **caractérisé en ce que** ledit appareil (10) et ladite unité de traitement (11) comprennent des moyens (21, 20 ; 60A, 61A ; 60B, 61B ; 110, 111) permettant une mise en oeuvre du procédé selon l'une quelconque des revendications 1 à 2.

4. Dispositif selon la revendication 3, **caractérisé en ce qu'**il comprend également un écran d'affichage (12) et **en ce que** ladite unité de traitement (11) comprend également des moyens (111) aptes à corriger ladite image numérique (IM, IMD) pour produire une image numérique corrigée (IMA) restituant la scène vue par ledit appareil numérique de prise d'images (10), ladite image numérique corrigée (IMA) étant destinée à un affichage sur ledit écran (12).

5. Dispositif selon la revendication 3, **caractérisé en ce que** les microlentilles du premier type (F1) sont situées dans au moins une zone centrale (ZC) dudit objectif anamorphique (60B) et les microlentilles du second type (F2) sont situées dans au moins une zone de bord (ZB) dudit objectif anamorphique (60B).

6. Dispositif selon l'une quelconque des revendications 3 à 5, **caractérisé en ce qu'**il comprend également un filtre infrarouge (62) disposé au niveau d'un plan image ou d'un plan image intermédiaire dudit appareil.

7. Dispositif selon la revendication 6, caractérisé en ce ledit filtre infrarouge (62) comprend au moins deux zones (70, 71) dans lesquelles sont assurées des filtrages distincts, une première zone (70) correspondant à la partie haute de l'image et dans laquelle les rayons infrarouges ne subissent sensiblement aucun filtrage et une seconde zone (71) correspondant à la partie basse de l'image et dans laquelle les rayons infrarouges sont filtrés sensiblement en totalité.

8. Dispositif selon la revendication 6, **caractérisé en ce que** ledit filtre infrarouge (62) est apte à assurer un filtrage des rayons infrarouges qui augmente progressivement du haut vers le bas de l'image numérique.

9. Dispositif selon l'une quelconque des revendications 3 à 8, **caractérisé en ce que** le capteur d'image (20, 61A, 61 B) est de type CCD ou CMOS.

## Patentansprüche

1. Verfahren zur Unterstützung des Fahrens eines Kraftfahrzeugs durch Erfassen von Objekten in einem digitalen Bild einer Straßenszene, das die Schritte umfasst:
- Erfassen (E1) eines digitalen Bildes mit Aberration (IM) einer Straßenszene mittels eines digitalen Bildaufnahmegerätes, wobei das digitale Bild wenigstens einen ersten (ZC) und einen zweiten (ZB) Bildbereich beinhaltet, wobei der erste und der zweite Bildbereich (ZC, ZB) jeweils wenigstens eine erste Auflösung bzw. wenigstens eine zweite Auflösung aufweist, wobei die erste und die zweite Auflösung verschieden sind;
- Berechnen (E2) eines bereitgestellten digitalen Bildes (IMD), durch Bereitstellung wenigstens eines Bereichs (ZB) des digitalen Bildes mit Aberration (IM);
- Anwenden (E3a, E3b) eines Objekterfassungsalgorithmus (A) in dem bereitgestellten digitalen Bild (IMD); und
- Liefern (E4) von Informationen (INF) über jedes in dem bereitgestellten digitalen Bild (IMD) erfasste Objekt,
und wobei der Schritt zur Bilderfassung (E1) mittels eines digitalen Bildaufnahmegerätes (10) erfolgt, das mit einem anamorphotischen Objektiv (21) ausgestattet ist, welches eine Vielzahl von Mikrolinsen (60B) umfasst, die in einen ersten und einen zweiten Typ unterteilt sind, denen jeweils eine erste (F1) bzw. eine zweite (F2) Brennweite entspricht, wobei der erste Mikrolinsen-Typ Linsen des ersten, sogenannten mittleren Bildbereichs (ZC) umfasst, die alle die gleiche erste Brennweite (F1) haben, wobei der zweite Mikrolinsen-Typ Linsen des zweiten, sogenannten Bildrandbereichs (ZB) umfasst, die alle die gleiche zweite Brennweite (F2) haben, die geringer ist als die erste Brennweite (F1), wobei die Mikrolinsen (60B) jeweils einer Vielzahl von Pixeln des Bildsensors (61B) zugeordnet sind, wobei die Mikrolinsen (60B) und die Pixel (61A) mit verschiedenen konstanten Abständen angeordnet sind, wobei der Abstand der Pixel kleiner ist als der Abstand der Mikrolinsen,
wobei die Aberration solchermaßen vorbestimmt ist, dass eine erste, im Wesentlichen konstante Winkelauflösung (Pc) erzielt wird für einen dem ersten Bildbereich (ZC) entsprechenden ersten Sektor (SC) des Öffnungswinkelfeldes des anamorphotischen Objektivs (21), sowie eine zweite variable Winkelauflösung (Pv) für einen dem zweiten Bildbereich (ZB) entsprechenden zweiten Sektor (Sb) des Öffnungswinkelfeldes des anamorphotischen Objektives (21), wobei die erste Winkelauflösung (Pc) größer ist als die zweite Winkelauflösung (Pv).

2. Verfahren nach Anspruch 1,
**dadurch gekennzeichnet, dass** der erste Bildbereich ein mittlerer Bereich (ZC) des digitalen Bildes (IM, IMD) und der zweite Bildbereich ein Randbereich (ZB) des digitalen Bildes (IM, IMD) ist.

3. Vorrichtung zum Erfassen von Objekten in einem digitalen Bild, die dazu ausgeführt ist, sich an Bord eines Kraftfahrzeugs zu befinden, und die ein digitales Bildaufnahmegerät (10) und eine Verarbeitungseinheit (11) umfasst,
**dadurch gekennzeichnet, dass** das Gerät (10) und die Verarbeitungseinheit (11) Mittel (21, 20; 60A, 61A; 60B, 61B; 110, 111) umfassen, die eine Durchführung des Verfahrens nach einem der Ansprüche 1 bis 2 erlauben.

4. Vorrichtung nach Anspruch 3,
**dadurch gekennzeichnet, dass** sie auch eine Anzeigeeinrichtung (12) umfasst und dass die Verarbeitungseinheit (11) auch Mittel (111) umfasst, die das digitale Bild (IM, IMD) zu korrigieren vermögen, um ein korrigiertes digitales Bild (IMA) zu erzeugen, das die von dem digitalen Bildaufnahmegerät (10) gesehene Szene wiedergibt, wobei das korrigierte digitale Bild (IMA) zur Darstellung auf der Anzeigeeinrichtung (12) bestimmt ist.

5. Vorrichtung nach Anspruch 3,
**dadurch gekennzeichnet, dass** die Mikrolinsen des ersten Typs (F1) in wenigstens einem mittleren Bereich (ZC) des anamorphotischen Objektivs (60B) angeordnet sind und die Mikrolinsen des zweiten Typs (F2) in wenigstens einem Randbereich (ZB) des anamorphotischen Objektivs (60B) angeordnet sind.

6. Vorrichtung nach einem der Ansprüche 3 bis 5,
**dadurch gekennzeichnet, dass** sie auch einen Infrarotfilter (62) umfasst, der in Höhe einer Bildebene oder einer Bildzwischenebene des Geräts angeordnet ist.

7. Vorrichtung nach Anspruch 6,
**dadurch gekennzeichnet, dass** der Infrarotfilter (62) wenigstens zwei Bereiche (70, 71) umfasst, in denen getrennte Filterungen gewährleistet sind, wobei ein erster Bereich (70) dem oberen Bildteil entspricht, in dem die Infrarotstrahlen im Wesentlichen nicht gefiltert werden, und ein zweiter Bereich (71) dem unteren Bildbereich entspricht, in dem die Infrarotstrahlen im Wesentlichen vollständig gefiltert werden.

8. Vorrichtung nach Anspruch 6,
**dadurch gekennzeichnet, dass** der Infrarotfilter (62) eine Filterung der Infrarotstrahlen zu gewährleisten vermag, die allmählich vom oberen zum unteren Teil des digitalen Bildes zunimmt.

9. Vorrichtung nach einem der Ansprüche 3 bis 8,
**dadurch gekennzeichnet, dass** der Bildsensor (20, 61A, 61B) vom Typ CCD oder CMOS ist.

## Claims

1. Process for assistance in driving a motor vehicle by means of detection of objects in a digital image of a road scene, comprising the steps of:
- acquisition (E1), by means of a digital image-taking device, of a digital image with aberration (IM), of a road scene, the said digital image incorporating at least a first (ZC) and a second (ZB) image area of the said first and second image areas (ZC, ZB) having respectively at least a first resolution and at least a second resolution, the said first and second resolutions being different;
- calculation (E2) of a deployed digital image (IMD), by deployment of at least one area (ZB) of the said digital image with aberration (IM);
- application (E3a, E3b) of an algorithm for detection of objects (A) in the said deployed digital image (IMD); and
- supply (E4) of information (INF) concerning each object detected in the said deployed digital image (IMD);
- and in that the said step of acquisition of an image (E1) is carried out by means of a digital image-taking device (10) which is equipped with an anamorphic lens (21) comprising a plurality of micro-lenses (60B) which are distributed into first and second types, to which there correspond respectively first (F1) and second (F2) focal distances, the first type of micro-lenses containing the lenses of the first area (ZC), known as the central area, of the image, which all have the same focal distance (F1), the second type of micro-lenses containing the lenses of the second area (ZB), known as the edge area, of the image, which all have the same second focal distance (F2), which is smaller than the first focal distance (F1), the said micro-lenses (60B) being associated respectively with a plurality of pixels of the said image sensor (61B), the said micro-lenses (60B) and the said pixels (61A) being arranged according to different constant pitches, the pitch of the pixels being smaller than the pitch of the micro-lenses,
the said aberration being predetermined such as to obtain a first, substantially constant angular resolution (Pc) for a first sector (SC) of the optical opening field of the said anamorphic lens (21) which corresponds to the said first image area (ZC), and a second, variable angular resolution (Pv) for a second sector (SB) of the optical opening field of the said anamorphic lens (21) which corresponds to the said second image area (ZB), the said first angular resolution (Pc) being greater than the said second angular resolution (Pv).

2. Process according to claim 1, **characterised in that** the said first image area is a central area (ZC) of the said digital image (IM, IMD), and the second image area is an edge area (ZB) of the said digital image (IM, IMD).

3. Device for detection of objects in a digital image, which is designed to be put on board a motor vehicle, comprising a digital image-taking device (10) and a processing unit (11), **characterised in that** the said device (10) and the said processing unit (11) comprise means (21, 20; 60A, 61A; 60B, 61B; 110, 111) which permit implementation of the process according to either of claims 1 or 2.

4. Device according to claim 3, **characterised in that** it also comprises a display screen (12), and **in that** the said processing unit (11) also comprises means (111) which can correct the said digital image (IM, IMD) in order to produce a corrected digital image (IMA) which restores the scene seen by the said digital image-taking device (10), the said corrected digital image (IMA) being destined for display on the said screen (12).

5. Device according to claim 3, **characterised in that** the micro-lenses of the first type (F1) are situated in at least one central area (ZC) of the said anamorphic lens (60B), and the micro-lenses of the second type (F2) are situated in at least one edge area (ZB) of the said anamorphic lens (60B).

6. Device according to any one of claims 3 to 5, **characterised in that** it also comprises an infrared filter (62) which is arranged at the level of an image plane or an intermediate image plane of the said device.

7. Device according to claim 6, **characterised in that** the said infrared filter (62) comprises at least two areas (70, 71) in which distinct filtering operations are carried out, i.e. a first area (70) corresponding to the high part of the image, and in which the infrared rays are subjected to substantially no filtering, and a second area (71) corresponding to the low part of the image, and in which the infrared rays are filtered substantially totally.

8. Device according to claim 6, **characterised in that** the said infrared filter (62) can carry out filtering of the infrared rays which increases progressively from the top towards the bottom of the digital image.

9. Device according to any one of claims 3 to 8, **characterised in that** the image sensor (20, 61A, 61B) is of the CCD or CMOS type.
